# DEMANDE DE BREVET EUROPEEN

(11) **EP 0 824 039 A1**
(43) Date de publication de la demande: **18.02.1998**
(21) Numéro de dépôt: 97401884.8
(22) Date de dépôt: 05.08.1997
(51) Int. Cl.: B01J 23/92, B01J 38/04, C07C 7/148

(54) **Procédé de traitement d'un catalyseur présentant une phase activée à base de plomb et contaminé par un composé de l'arsenic**

(30) Priorité: 12.08.1996 FR 9610108
(71) Demandeur: Société Française des Produits pour Catalyse "PROCATALYSE", 92500 Rueil-Malmaison (FR)
(72) Inventeur: Berthier, Paul, 26700 La Garde Adhemar (FR); Ladirat, Christian, 30126 Saint Laurent Des Arbres (FR); Bournonville, Jean-Paul, 30340 Rousson (FR); Nocher, Bernard, 78170 La Celle Saint Cloud (FR)
(74) Mandataire: Dubruc, Philippe

(57) **Abrégé**

L'invention concerne un procédé de traitement d'un catalyseur supporté usagé présentant une phase active à base d'un composé du plomb et contaminé par un composé de l'arsenic.

Ce procédé consiste à chauffer le catalyseur usagé à une température d'au moins 550 °C en présence d'un mélange gazeux comprenant au moins 2 % en volume d'au moins un gaz réducteur, le complément étant formé d'un gaz inerte.

A l'issu de ce traitement, le catalyseur traité présente les mêmes caractéristiques qu'il possédait avant sa contamination par l'arsenic.

## Description

La présente invention concerne un procédé de traitement de catalyseurs usagés contaminés par de l'arsenic afin de les régénérer et les réutiliser.

De nos jours, le traitement des produits usés, contaminés, est une activité prenant de plus en plus d'importance. Les contraintes en matière d'environnement conduisent à épurer tous types de liquides, solide ou gaz visant à abaisser leur taux de matières polluantes et éviter le rejet de ces dernières dans l'environnement.

De nombreux catalyseurs ont été développés dans le but d'éliminer ces impuretés par absorption, adsorption ou réactions chimiques. Cependant, une fois que les produits contaminés ont été épurés, les impuretés se retrouvent à fortes concentrations dans ces catalyseurs que l'on doit stocker ou détruire.

Actuellement, on tend à essayer de traiter ces catalyseurs usagés de manière à en éliminer les impuretés. Ce traitement vise, d'une part, à récupérer des impuretés pour les valoriser ou les transformer sous une forme facilement stockable, et d'autre part, à régénérer les catalyseurs usagés afin de pouvoir les réutiliser. Ce deuxième aspect permet en outre de réaliser des économies puisqu'il n'est pas nécessaire de racheter un nouvelle charge de catalyseur neuf.

Parmi les impuretés particulièrement néfastes pour l'environnement, l'arsenic tient une place importante. Il est notamment présent dans des gaz tels que les gaz craqués de vapocraquage. Un moyen d'éliminer l'arsenic de ces gaz est de les mettre en contact avec un catalyseur à base d'un composé de plomb par exemple un catalyseur supporté présentant une phase active à base d'un composé du plomb, par exemple de l'oxyde de plomb.

L'arsenic présent dans les gaz réagit au contact de ces catalyseurs pour former un composé de l'arsenic notamment un composé mixte du plomb et de l'arsenic qui reste ad/absorbé sur le catalyseur.

Actuellement, les catalyseurs usagés comprenant ces composés de l'arsenic sont détruits ou stockés. Et une nouvelle charge de catalyseur neuf doit être utilisée pour continuer de traiter les gaz à épurer.

Un but de la présente invention est de proposer un procédé de traitement des catalyseurs usagés de ce type permettant non seulement d'en éliminer l'arsenic, mais de plus, de régénérer la phase active initiale dudit catalyseur, de manière à pouvoir l'utiliser de nouveau dans la même application sans avoir à redéposer une phase active.

Dans ce but, l'invention concerne un procédé de traitement d'un catalyseur supporté présentant un phase active à base d'un composé du plomb et contaminé par un composé de l'arsenic, caractérisé en ce qu'on chauffe ledit catalyseur à une température d'au moins 500 °C en présence d'un mélange gazeux comprenant au moins 2 % en volume d'au moins un gaz réducteur, le complément étant formé d'un gaz inerte.

D'autres avantages de l'invention apparaîtront plus clairement à la lecture de la description et des exemples.

L'invention concerne donc un procédé de traitement d'un catalyseur supporté présentant un phase active à base d'un composé du plomb et contaminé par un composé de l'arsenic, caractérisé en ce qu'on chauffe ledit catalyseur à une température d'au moins 500 °C en présence d'un mélange gazeux comprenant au moins 2 % en volume d'au moins un gaz réducteur, le complément étant formé d'un gaz inerte.

Le gaz réducteur en question peut être choisi parmi : H₂, CO, CH₄ et tout autre gaz réducteur.

Quant au gaz inerte, il peut être choisi parmi : Ar, N₂, He.

La température de traitement est en général comprise entre 550 °C et 1000 °C, de préférence entre 700 et 900 °C.

Le temps de séjour peut être variable. De préférence, il est compris entre 1 et 15 heures.

De même, le débit de balayage du mélange gazeux peut varier et est, de préférence, compris entre 0,1 et 10 litres/heure/gramme de catalyseur.

Le composé de l'arsenic émis au cours du traitement est éliminé sous forme gazeuse. Ces vapeurs peuvent être récupérées par tout moyen connu de l'homme du métier, par exemple, elles peuvent être condensées sous forme d'arsenic métallique.

Le catalyseur peut être chauffé dans tout type de four, mais de préférence, on utilise un four tubulaire ou un four statique.

Le procédé selon l'invention est particulièrement utile pour traiter un catalyseur supporté présentant une phase active à base d'oxyde de plomb. La quantité de ce composé dans le catalyseur à traiter peut être variable, elle peut atteindre 22 % en poids par rapport à la masse du catalyseur. Ce type de catalyseur capte l'arsenic sous forme d'un oxyde mixte du plomb et de l'arsenic.

Le catalyseur supporté peut présenter un support minéral base d'alumine, de silice, de silice-alumine ou de charbon.

Il peut s'agir par exemple du MEP 191 commercialisé par Procatalyse.

L'élimination de l'arsenic est suivie par analyse au moyen de différentes techniques connues pour le dosage de l'arsenic notamment l'absorption atomique.

L'avantage du procédé selon l'invention est que non seulement l'arsenic est éliminé du catalyseur mais, de plus, que la phase active du catalyseur est régénérée et que le support présente les mêmes caractéristiques que lors de sa première utilisation.

Les exemples suivants illustrent l'invention sans toutefois en limiter la portée.

### EXEMPLES

### Exemple 1 selon l'invention

On part d'un catalyseur MEP 191 commercialisé par Procatalyse présentant les caractéristiques suivantes :
- Support: .alumine
   .surface spécifique 115 m²/g
- Phase active .PbO
   . taux : 23 % en poids par rapport au catalyseur

Ce catalyseur est utilisé dans une unité pour éliminer d'un gaz naturel de l'arsenic. A la fin du traitement du gaz, le catalyseur comprend 1,6 % en poids d'arsenic par rapport au poids du catalyseur.

Le catalyseur est vidé de l'unité pour être traité selon le procédé de l'invention.

### Mode opératoire

On introduit 20 g de catalyseur usagé dans un four tubulaire

On monte la température à 100 °C à raison de 5 °C par minute sous balayage d'argon introduit à un débit de 3 litres/heure/gramme de catalyseur.

Puis on introduit un mélange gazeux d'argon et d'hydrogène (2,5 % en volume d'hydrogène). Le débit du mélange est de 3 litres/heure/gramme de catalyseur

Ce traitement est réalisé pendant 5 h à 700 °C.

### Résultats

- taux en arsenic : 0,14 % en poids par rapport au catalyseur, soit une élimination de l'arsenic supérieure à 90 %,
- taux de la phase active PbO : 22,4 % en poids par rapport au catalyseur,
- surface spécifique : 94 m²/g.

### Exemple 2 selon l'invention

On répète l'exemple 1 si ce n'est que la température de traitement est de 590 °C au lieu de 700 °C.

### Résultats

- taux en arsenic : 0,5 % en poids par rapport au catalyseur, soit une élimination de l'arsenic de 70 %,
- taux de la phase active PbO : 21,2 % en poids par rapport au catalyseur,
- surface spécifique : 109 m²/g.

### Exemple comparatif 3 sans gaz réducteur

On répète l'exemple 1 si ce n'est que le gaz utilisé ne comprend que de l'argon, aucun gaz réducteur n'y est ajouté.

### Résultats

- taux en arsenic : 1,46 % en poids par rapport au catalyseur, soit une élimination de l'arsenic inférieure à 9 %
- taux de la phase active PbO : 21,9 % en poids par rapport au catalyseur
- surface spécifique : 76 m²/g

### Exemple comparatif 4 à température inférieure à 550 °C

On répète l'exemple 1 si ce n'est que la température au cours du traitement est de 420 °C et non de 700 °C.

### Résultats

- taux en arsenic : 1,28 % en poids, par rapport au catalyseur, soit une élimination de l'arsenic de l'ordre de 20 %
- taux de la phase active PbO : 22,2 % en poids par rapport au catalyseur
- surface spécifique : 108 m²/g

## Revendications

1. Procédé de traitement d'un catalyseur supporté présentant un phase active à base d'un composé du plomb et contaminé par un composé de l'arsenic, caractérisé en ce qu'on chauffe ledit catalyseur à une température d'au moins 550 °C en présence d'un mélange gazeux comprenant au moins 2 % en volume d'au moins un gaz réducteur, le complément étant formé d'un gaz inerte.

2. Procédé selon la revendication 1, caractérisé en ce que le gaz réducteur peut être choisi parmi : H₂, CO, CH₄.

3. Procédé selon la revendication 1 ou 2, caractérisé en ce que le gaz inerte est choisi parmi : Ar, N₂, He.

4. Procédé selon l'une quelconque des revendications précédentes, caractérisé en ce que la température est comprise entre 550 et 1000 °C.

5. Procédé selon l'une quelconque des revendications précédentes, caractérisé en ce que le temps de séjour est compris entre 1 et 15 heures.

6. Procédé selon l'une quelconque des revendications précédentes, caractérisé en ce que le catalyseur est balayé par le mélange gazeux à un débit compris entre 0,1 et 10 litres/heure/gramme de catalyseur.

7. Procédé selon l'une quelconque des revendications précédentes, caractérisé en ce que les vapeurs émises au cours du traitement sont condensées sous forme d'arsenic métallique.

8. Procédé selon l'une quelconque des revendications précédentes, caractérisé en ce qu'on chauffe le catalyseur dans un four tubulaire ou dans un four statique.

9. Procédé selon l'une quelconque des revendications précédentes, caractérisé en ce que le catalyseur supporté présente un support minéral à base d'alumine, de silice, de silice-alumine ou de charbon.

10. Procédé selon l'une quelconque des revendications précédentes, caractérisé en ce que le catalyseur supporté présente une phase active à base d'oxyde de plomb.

11. Procédé selon la revendication 10, caractérisé en ce que le le catalyseur est contaminé par un oxyde mixte du plomb et de l'arsenic.
